# EUROPÄISCHE PATENTSCHRIFT

(11) **EP 0 637 525 B1**
(45) Veröffentlichungstag und Bekanntmachung des Hinweises auf die Patenterteilung: **24.09.1997**
(21) Anmeldenummer: 94111151.0
(22) Anmeldetag: 18.07.1994
(51) Int. Cl.: B60Q 1/52, G01S 13/93

(54) **Verfahren zum Vermeiden von Kollisionen von Kraftfahrzeugen**
Vehicle anti-collision system
Procédé pour éviter les collisions entre véhicules

(30) Priorität: 06.08.1993 DE 4326529
(43) Veröffentlichungstag der Anmeldung: 08.02.1995
(73) Patentinhaber: Bayerische Motoren Werke Aktiengesellschaft, 80788 München (DE)
(72) Erfinder: Waffler, Andreas, D-85579 Neubiberg (DE); Siegl, Winfried, D-92339 Beilngries (DE); Weishaupt, Walter, D-81247 München (DE)

(56) Entgegenhaltungen:
- WO-A-91/09323
- US-A- 3 898 652
- US-A- 5 091 726

## Beschreibung

Die Erfindung bezieht sich auf ein Verfahren nach dem Oberbegriff des Patentanspruchs 1.

Bei einem derartigen Verfahren, wie es beispielsweise aus der DE-C-2 642 211, der US-A-3 898 652 und der US-A-5 091 726 bekannt ist, wird die Annäherungsgeschwindigkeit an ein anderes Fahrzeug oder Hindernis laufend ermittelt und zu Beeinflussung oder Steuerung des Abstands herangezogen. Dabei soll insbesondere der Abstand selbsttätig verringert werden, wenn eine unzulässige Annäherung eingetreten ist. Das Eigenverhalten des Kraftfahrzeugs wird nur insoweit berücksichtigt, als es für die Berechnung der Annäherungsgeschwindigkeit herangezogen wird. Nicht berücksichtigt wird hingegen, ob die Annäherung dadurch verursacht wird, daß das Kraftfahrzeug mit gleichmäßiger Geschwindigkeit auf ein stehendes oder deutlich langsameres Fahrzeug auffährt oder aber ob das Fahrzeug seinen Abstand verringert, während es bereits selbst gebremst wird. Im letzteren Fall hat der Fahrer selbst bereits einen Bremsvorgang vorbereitet oder sogar ausgelöst und seine Aufmerksamkeit auf das Verkehrsgeschehen eindeutig erhöht.

Der Erfindung liegt die Aufgabe zugrunde, ein Verfahren der eingangs genannten Art zu schaffen, bei dem eine Warnmaßnahme nur ausgelöst wird, wenn dies unbedingt erforderlich ist.

Die Erfindung löst diese Aufgabe durch die Merkmale des Patentanspruchs 1.

Unter Warnmaßnahme ist nicht nur wie beim Stand der Technik eine selbsttätige geschwindigkeitsverlangsamende Maßnahme, sondern auch eine optische oder akustische Warnung oder auch andere Maßnahme zu verstehen, die die Aufmerksamkeit des Fahrzeugführers erhöht.

Im Gegensatz zum Stand der Technik wird das Eigenverhalten des Kraftfahrzeugs berücksichtigt. Verringert das Kraftfahrzeug seine Eigengeschwindigkeit, so wird der kritische Abstand verkürzt. Das Maß für diese Verkürzung kann abhängig sein von der Ausgangsgeschwindigkeit und/oder der Geschwindigkeitsverringerung. Ferner können weitere Einflußgrößen berücksichtigt werden. Hierzu zählen der Straßenzustand - eine feuchte oder nasse Straße ist beispielsweise anhand des eingeschalteten Scheibenwischers zu erkennen - oder die atmosphärischen Bedingungen - das Vorhandensein schlechter Sichtbedingungen bei Nacht und Nebel kann anhand der eingeschalteten Beleuchtung erkannt werden -. Weiterhin kann die Verkürzung angepaßt sein an das Reaktionsvermögen des Fahrers, ermittelt z.B. anhand eines vorhergehenden Bremsvorgangs. Das Ziel der Erfindung ist dabei, nur dann tatsächlich eine Warnmaßnahme zu ergreifen, wenn dies aufgrund der Situation und des Verhaltens des Fahrers notwendig ist.

Die Verringerung der Eigengeschwindigkeit kann auf vielfältige Weise erkannt und/oder bestimmt werden. So ist es beispielsweise möglich, das Loslassen des Gaspedals zu erfassen und daraus auf eine erhöhte Aufmerksamkeit des Fahrers sowie eine bevorstehende Verringerung der Fahrzeuggeschwindigkeit zu schließen. Dasselbe gilt ergänzend oder alternativ bei Betätigen des Bremspedals. Beides, d.h. sowohl das Betätigen der Bremse als auch das Loslassen des Gaspedals läßt auf eine Verringerung der Fahrzeuggeschwindigkeit schließen noch bevor diese eingetreten ist. Die Verringerung des kritischen Abstands erfolgt dabei präventiv, d.h. noch bevor das Kraftfahrzeug möglicherweise nur vorübergehend den kritischen Abstand unterschreitet.

Alternativ oder ergänzend ist es auch möglich, auf die Verringerung der Geschwindigkeit aus dem Drehzahlverhalten mindestens eines Fahrzeugrads zu schließen. Um auch natürliche Änderungen der Drehzahlen eines Fahrzeugrads, wie sie beim Befahren einer Kurve auftreten, zu berücksichtigen, kann zusätzlich ein Lenkwinkelsignal oder die Drehzahl eines korrespondierenden Fahrzeugrads derselben Achse unterlegt werden.

Die genannten Verfahren zum Erkennen einer Verringerung der Fahrzeuggeschwindigkeit zeichnen sich durch eine besonders einfache Möglichkeit der Realisierung aus, da Sensoren zum Erkennen der jeweiligen maßgeblichen Größe ohnehin in der Regel bereits vorhanden sind.

Demgegenüber ergibt sich eine deutliche Verbesserung hinsichtlich der Genauigkeit, mit der eine eventuelle Kollisionsgefahr mit dem Eigenverhalten des Kraftfahrzeugs in Beziehung gesetzt wird dann, wenn das Annäherungsverhalten des Kraftfahrzeugs, bezogen auf das Hindernis berücksichtigt wird.

Dabei sind folgende Extremsituationen betrachtet. Nähert sich das Fahrzeug dem Hindernis mit unveränderter Geschwindigkeit an, d.h. ist die Eigenbeschleunigung gleich oder zumindest annähernd gleich dem Wert Null, so dürfte die Aufmerksamkeit des Fahrzeugführers reduziert sein. Es ist daher erforderlich, ihn wesentlich früher auf die Gefahr einer Kollision aufmerksam zu machen als in dem Fall, bei dem er selbst bereits einen Bremsvorgang eingeleitet hat und sich an ein Hindernis annähert. In diesem Fall ist seine Aufmerksamkeit gegenüber dem normalen Verkehrsgeschehen erhöht und er besitzt in aller Regel selbst die Möglichkeit, eine Kollision zu vermeiden. Es ist dann meist nicht mehr erforderlich, ihn auf die Gefahr einer Kollision aufmerksam zu machen. Dies ist vor allem dann der Fall, wenn der Fahrzeugführer seine Geschwindigkeit stärker verringert, als dies zum Vermeiden einer Kollision erforderlich ist. Die im physikalischen Sinn negative Eigenbeschleunigung ist dann größer als die Annäherungsbeschleunigung. Nur wenn die Eigenbeschleunigung kleiner oder aus Sicherheitsgründen angenommen gleich der Annäherungsbeschleunigung ist, reicht die vom Fahrzeugführer vorgenommene Verzögerung des Kraftfahrzeugs nicht aus, um eine Kollision sicher zu vermeiden. In diesem Fall erfolgt eine Warnmaßnahme, doch ist hierfür ein wesentlich geringerer Abstand vom Hindernis maßgeblich als in dem vorhin betrachteten Fall. Der Fahrzeugführer muß "nur" darauf aufmerksam gemacht werden, seine Bemühungen zur Kollisionsvermeidung zu verstärken, nachdem er bereits eine hierfür erforderliche Maßnahme ergriffen hat.

Der Umfang, in dem der Fahrzeugführer eine entsprechende Maßnahme ergriffen hat, kann mit Vorteil allein aus der Eigenbeschleunigung des Kraftfahrzeugs, d.h. der Veränderung der Eigengeschwindigkeit bestimmt werden. Alternative Verfahren, die beispielsweise darauf abzielen, das Loslassen des Gaspedals und das Betätigen der Bremse festzustellen, erfordern demgegenüber einen wesentlich geringeren Aufwand; sie sind jedoch ungenauer als ein in der Regel rein rechnerisches Verfahren, das die Veränderung der Geschwindigkeit des Kraftfahrzeugs selbst analysiert.

Das zeitliche Hinausschieben für das Ausführen einer Warnmaßnahme, das sich räumlich in einer Verringerung des kritischen Abstands ausdrückt, kann unter der erfindungswesentlichen Voraussetzung, daß die Geschwindigkeit verringert wird und/oder daß die Eigenbeschleunigung gleich oder größer der Annäherungsbeschleunigung ist, im Prinzip solange fortgesetzt werden, bis das Kraftfahrzeug eine Annäherungsbeschleunigung gleich Null besitzt. In diesem Fall hat das Kraftfahrzeug das Hindernis im äußersten Fall gerade noch nicht erreicht und nähert sich diesen nicht mehr an. Aus Sicherheitsgründen ist es jedoch vorteilhaft, auch in diesem Fall die Warnmaßnahme auszulösen, wenn der kritische Abstand einen vorgegebenen Mindestwert erreicht hat. Damit läßt sich beispielsweise ein zu dichtes Annähern an das Hindernis vermeiden. In diesem Zusammenhang kann es vorteilhaft sein, den Mindestwert für den kritischen Abstand in seinem Wert davon abhängig zu machen, welche Geschwindigkeit das Kraftfahrzeug bei Reduktion der Annäherungsgeschwindigkeit auf den Wert Null besitzt. Ist die Geschwindigkeit dabei noch relativ groß, so kann ein zu dichtes Auffahren auf das Hindernis bei einem entsprechend größeren Wert für den minimalen kritischen Abstand ausgelöst werden. Bei einer dann vorliegenden wesentlich kleineren Geschwindigkeit kann auch der Minimalwert des kritischen Abstands entsprechend kleiner gewählt werden.

Bei der Annäherung des Kraftfahrzeugs an ein Hindernis kann die Eigenbeschleunigung vorübergehend kleiner als die Annäherungsbeschleunigung sein. Um dann, wenn dieser Zustand relativ kurze Zeit vorliegt, das Auslösen der Warnmaßnahme zu verhindern, kann hierfür eine vorgegebene Wartezeit vorgesehen sein. Diese Wartezeit kann aus den bereits angestellten Sicherheitsüberlegungen heraus auch abhängig von der jeweiligen Fahrzeuggeschwindigkeit sein und bei einer noch großen Geschwindigkeit des Kraftfahrzeugs kleiner als bei einer dann bestehenden kleinen Fahrzeuggeschwindigkeit sein.

Die bisherige Beschreibung beschäftigte sich lediglich mit einer einzigen Warnmaßnahme. Häufig ist es vorteilhaft, ein ganzes Bündel von Maßnahmen zu ergreifen und mit zunehmender Dringlichkeit auf die Notwendigkeit hinzuweisen, eine Kollision zu vermeiden. So kann es beispielsweise als erste Dringlichkeitsstufe ausreichen, eine optische Information in Form eines unveränderlichen Lichtsignals auszugeben. Als zweite Stufe kann ein Dauer-Lichtsignal in eine blinkende Anzeige übergehen. Als dritte Stufe kann eine akustische Warnung in Form eines Signaltons vorgesehen sein. In der vierten Stufe kann selbsttätig ein Eingriff in die Fahrleistung durch Reduktion der Zahl der befeuerten Zylinder vorgenommen werden. Als nächste Stufe kann dann selbsttätig ein Bremsvorgang ausgelöst werden.

Diese Folge von Warnmaßnahmen kann in der Form vorgegebenen Abstandswerten als Auslöser zugeordnet werden, wie es in Patentanspruch 5 angegeben ist. Damit ergibt sich eine rasterartige Aufteilung des kritischen Abstands und die Zuordnung dieses Rasters zu den einzelnen Warnmaßnahmen. Die Verringerung des kritischen Abstands, d.h. des für die erste Warnmaßnahme maßgeblichen Abstands vom Hindernis bei einer Eigenreaktion des Kraftfahrzeugs führt dann zu einer Verringerung der Rasterlänge, d.h. des zwischen den verschiedenen Warnmaßnahmen maßgeblichen relativen Abstands. Dies hat zur Folge, daß dann, wenn sich bei einem reduzierten Raster das Kraftfahrzeug in gefährlicher Weise an das Hindernis annähert, d.h. wenn die Eigenbeschleunigung dann kleiner als die Annäherungsbeschleunigung ist, die Warnmaßnahmen wesentlich schneller als bei der ursprünglichen Größe des Rasters durchlaufen werden.

Schließlich sei auch der Fall betrachtet, daß das Hindernis wegfällt. In diesem Fall kann es vorteilhaft sein, den kritischen Abstand wieder auf den Wert einzustellen, der vor Auftreten des Hindernisses maßgeblich war. Bei einer erneuten Annäherung an das Hindernis "erlebt" der Fahrzeugführer das Auftreten der Warnmaßnahme(n) in derselben Weise wie im vorangegangenem Fall.

Die Erfindung ist anhand der Zeichnung weiter erläutert. Es zeigt
- Fig.1: den grundsätzlichen Aufbau einer Anordnung zum Vermeiden von Kollisionen von Kraftfahrzeugen gemäß der Erfindung und
- Fig.2: anhand von vier Diagrammen die Arbeitsweise einer Vorrichtung, die nach dem erfindungsgemäßen Verfahren arbeitet.

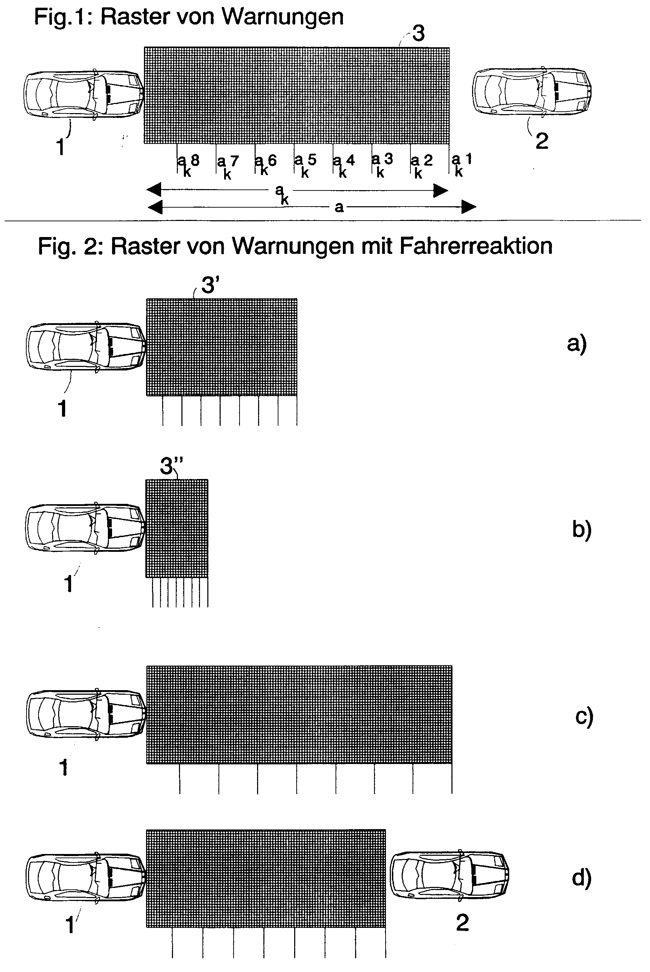

Im Fig.1 ist schematisch die Situation dargestellt, bei der ein Kraftfahrzeug 1 auf ein Hindernis, hier ein Kraftfahrzeug 2 auffährt. Das Kraftfahrzeug 1 ist mit einem Laser-Abstandsmeßgerät versehen, mit dem der Abstand a zwischen den Fahrzeugen 1 und 2 bestimmt werden kann. Zusätzlich besitzt das Kraftfahrzeug 1 eine Recheneinheit, (nicht dargestellt), mit der die Annäherungsbeschleunigung, d.h. das Zeitverhalten der Annäherungsgeschwindigkeit (= die zeitliche Änderung des Abstands a) sowie die Eigenbeschleunigung des Kraftfahrzeugs 1, d.h. die zeitliche Änderung der Eigengeschwindigkeit bestimmt werden kann. Ebenfalls ist es möglich, mit Hilfe dieser Recheneinheit festzustellen, wie sich die Annäherungsbeschleunigung und die Eigenbeschleunigung zueinander verhalten, d.h. die Größer-, Gleich- und Kleinerrelation zu bestimmen.

Ausgehend von dem im Fig. 1 dargestellten unkritischen Fall, bei dem das Kraftfahrzeug 1 einen ausreichenden Abstand a vom Kraftfahrzeug 2 besitzt, soll sich nun das Kraftfahrzeug 1 an das Fahrzeug 2 annähern. Es sei zunächst der Fall betrachtet, bei dem das Kraftfahrzeug 1 seine Geschwindigkeit nicht verändert, während das Fahrzeug 2 eine wesentlich geringere Geschwindigkeit als das Fahrzeug 1 besitzt, so daß sich der Abstand a verringert. Für den angenommenen Fall, daß das Kraftfahrzeug 1 seine Geschwindigkeit nicht verringert, ist ein Raster 3 von Warnmaßnahmen vorgesehen, die ausgehend von einem kritischen Abstand aₖ bei Verringerung des Abstands aufeinanderfolgend ausgelöst werden. Ausgehend von einer einfachen optischen Warnung in Form eines Dauer-Lichtsignals bei Annäherung eines Kraftfahrzeugs 1 an das Fahrzeug 2 bei einem Abstand aₖ1 wird bei weitere Annäherung auf den Abstand aₖ2 die optische Warnung durch Aussenden eines Blinksignals verstärkt. Nähert sich das Fahrzeug bis auf den Wert aₖ3 an, so wird zusätzlich zu dem weiterhin blinkenden Lichtsignal ein akustisches Signal in Form eines Gongs ausgelöst. Beim Abstand aₖ4 wird eine Folge von Kurzzeittönen erzeugt, die bei weiterer Annäherung, die hierfür maßgeblichen Abstandswerte sind mit aₖ5, aₖ6 und aₖ7 bezeichnet, in ihrer Intensität und/oder Frequenz ansteigen. Unterhalb des Abstand aₖ7 wird selbsttätig eine Reduktion der Antriebsleistung und bei Unterschreiten eines noch geringeren Abstands aₖ8 selbsttätig eine Bremsung des Fahrzeugs 1 vorgenommen.

Anders stellt sich die Situation dar, wenn das Kraftfahrzeug 1 seine Geschwindigkeit verringert, während es sich an das Fahrzeug 2 annähert. In diesem Fall ist das Raster der verschiedenen Warnmaßnahmen in seinen Abmessungen reduziert. Die für die verschiedenen Warnmaßnahmen maßgeblichen Abstände, beispielsweise der für die erste Warnmaßnahme vorgesehene Abstand aₖ1' ist wesentlich geringer als im Fall von Fig. 1. Die Abmessungen des Rasters 3'' (Diagramm b) sind umso kleiner, je stärker das Kraftfahrzeug 1 seine Geschwindigkeit verringert. Maßgeblich hierfür ist der Wert der Eigenbeschleunigung des Kraftfahrzeugs 1 mit verglichen mit dem der Abstandsbeschleunigung. Ist die Eigenbeschleunigung betragsmäßig größer oder gleich der Abstandsbeschleunigung, nähert sich das Kraftfahrzeug 1 dem Fahrzeug 2 derart an, daß es ggf. sogar zum Stehen kommt, sofern das Fahrzeug 2 steht bzw. während der Annäherung zum Stehen kommt. Es braucht dann keine Warnmaßnahme ergriffen oder ausgelöst werden. Durch die Verkürzung des Warnrasters entsprechend dem Annäherungsverhalten das Kraftfahrzeug 1 bezogen auf seine eigene Geschwindigkeit werden bei einer unkritischen Annäherung, d.h. wenn der Fahrer in ausreichendem Maße dafür Sorge trägt, eine Kollision zu vermeiden, die vorgegebenen Warnmaßnahmen nicht ausgelöst. Der Fahrer wird somit nicht unnötigerweise auf die zunehmende Annäherung an das vorausfahrende bzw. vorausbefindliche Fahrzeug aufmerksam gemacht. Nur wenn während der Annäherung eine Kollisionsgefahr besteht, wird wie beschrieben die Folge von Warnmaßnahmen ausgelöst.

Das in Fig. 2 ferner dargestellte Diagramm c symbolisiert den Fall, bei dem das Hindernis (Fahrzeug 2) nicht mehr vorhanden ist. In diesem Fall wird das Raster 3 auf den ursprünglichen Wert von Fig. 1 ausgelöst. Es besitzt dann den Abstand a, wie in Fig. 1 dargestellt.

Ähnlich verhält es sich im Fall, der im Diagramm d dargestellt ist. Dabei hat das Fahrzeug 2, während das Fahrzeug 1 seine Geschwindigkeit verringert hat, den Erfassungsbereich nicht verlassen. Das Raster wird nachdem die Eigenbeschleunigung des Fahrzeugs 1 wieder Null ist bis zu dem Fahrzeug 2 ausgedehnt, falls dieses näher als der ursprüngliche Abstand a vom Fahrzeug 1 entfernt ist. Mit dieser Maßnahme wird eine Fehlwarnung durch "Einfangen" des Fahrzeugs 2 beim Ausdehnen des Rasters vermieden. Eine erneute Information erfolgt erst bei weiterem Annähern des Fahrzeugs 2.

## Patentansprüche

1. Verfahren zum Vermeiden von Kollisionen von Kraftfahrzeugen, bei dem der Abstand eines Kraftfahrzeugs zu einem voraus befindlichen Hindernis mittels eines Abstandsmeßgeräts bestimmt und bei einem kritischen Abstand eine Warnmaßnahme ausgelöst wird, wenn die Eigengeschwindigkeit des Kraftfahrzeugs verringert wird, dadurch gekennzeichnet, daß der kritische Abstand verkürzt wird, wenn durch Loslassen des Gaspedals und/oder Betätigen des Bremspedals auf eine bevorstehende Verringerung der Fahrgeschwindigkeit geschlossen wird, noch bevor diese eingetreten ist.

2. Verfahren nach Anspruch 1, dadurch gekennzeichnet, daß die Verringerung der Eigengeschwindigkeit aus der Drehzahländerung zumindest eines Fahrzeugrads ermittelt wird.

3. Verfahren nach einem der Ansprüche 1 bis 2, dadurch gekennzeichnet, daß die Geschwindigkeitsänderung des eigenen Kraftfahrzeugs (i.f. Eigenbeschleunigung) mit der zeitlichen Änderung des Abstands (i.f. Annäherungsbeschleunigung) verglichen wird und daß der kritische Abstand solange verkürzt und die Warnmaßnahme nicht ausgelöst wird, solange die Eigenbeschleunigung größer gleich der Annäherungsbeschleunigung ist.

4. Verfahren nach Anspruch 3, dadurch gekennzeichnet, daß die Warnmaßnahme äußerstenfalls bei einem kritischen Abstand ausgelöst wird, der einen vorgegebenen Mindestwert besitzt.

5. Verfahren nach Anspruch 4, dadurch gekennzeichnet, daß der Mindestwert von der eigenen Geschwindigkeit des Kraftfahrzeugs abhängt.

6. Verfahren nach einen der Ansprüche 1 bis 5, dadurch gekennzeichnet, daß die Warnmaßnahme nur ausgelöst wird, wenn der kritische Abstand für eine vorgegebene Zeit unterschritten wird.

7. Verfahren nach einen der Ansprüche 1 bis 6, dadurch gekennzeichnet, daß eine Folge von Warnmaßnahmen ausgeführt wird, wenn das Kraftfahrzeug den kritischen Abstand unterschreitet und das diese Folgemaßnahmen aufeinanderfolgenden Abstandswerten zugeordnet sind, die sich durch Aufteilung des kritischen Abstands entsprechend der Anzahl der Folgemaßnahmen ergibt.

8. Verfahren nach einen der Ansprüche 1 bis 7, dadurch gekennzeichnet, daß bei Wegfall des Hindernisses der kritische Abstand wieder mit dem Wert eingestellt wird, der vor Auftreten des Hindernisses maßgeblich war.

## Claims

1. A method of avoiding collisions of motor vehicles, wherein the distance of a vehicle from an obstacle in front is determined by a distance meter and, when the distance becomes critical, a warning step is initiated if the actual speed of the vehicle is being reduced, characterised in that if, as a result of releasing the accelerator pedal and/or actuating the brake pedal, an impending reduction in speed is deduced, the critical distance is shortened even before the reduction has occurred.

2. A method according to claim 1, characterised in that the reduction in speed is determined from the change in speed of at least one wheel of the vehicle.

3. A method according to claim 1 or 2, characterised in that the variation in speed of the actual vehicle (the actual acceleration) is compared with the variation in time of the distance (the acceleration of approach), and the critical distance is shortened and the warning step is postponed as long as the actual acceleration is greater than or equal to the acceleration of approach.

4. A method according to claim 3, characterised in that the warning step in the extreme case is triggered at a critical distance which has a preset minimum value.

5. A method according to claim 4, characterised in that the minimum value depends on the actual speed of the vehicle.

6. A method according to any of claims 1 to 5, characterised in that the warning step is triggered only when the distance falls below the critical value during a preset time.

7. A method according to any of claims 1 to 6, characterised in that a sequence of warning steps is carried out if the vehicle is at less than the critical distance, and the sequence of steps is associated with successive distance values obtained by dividing the critical distance in accordance with the number of successive steps.

8. A method according to any of claims 1 to 7, characterised in that if the obstacle is removed the critical distance is reset at the value which was standard before the obstacle appeared.

## Revendications

1. Procédé pour éviter les collisions entre les véhicules, selon lequel on détermine la distance d'un véhicule par rapport à un obstacle qui se trouve devant à l'aide d'un appareil de télémétrie et en cas de distance critique on déclenche une action d'avertissement, si la vitesse propre du véhicule diminue,
caractérisé en ce qu'
on raccourcit la distance critique si par relâchement de la pédale d'accélérateur et/ou actionnement de la pédale de frein, on conclut à une future réduction de la vitesse du véhicule avant même que celle-ci ne se produise.

2. Procédé selon la revendication 1,
caractérisé en ce qu'
on détermine la vitesse propre à partir de la variation de la vitesse de rotation d'au moins une des roues du véhicule.

3. Procédé selon l'une des revendications 1 et 2,
caractérisé en ce que
la variation de vitesse propre du véhicule (c'est-à-dire l'accélération propre) est comparée à la variation dans le temps de la distance (c'est-à-dire l'accélération de rapprochement), on raccourcit la distance critique et on ne déclenche pas l'action d'avertissement aussi longtemps que l'accélération propre est supérieure ou égale à l'accélération de rapprochement.

4. Procédé selon la revendication 3,
caractérisé en ce que
l'action d'avertissement est déclenchée dans le cas extrême pour une distance critique ayant une valeur minimale prédéterminée.

5. Procédé selon la revendication 4,
caractérisé en ce que
la valeur moyenne dépend de la vitesse propre du véhicule.

6. Procédé selon l'une des revendications 1 à 5,
caractérisé en ce que
l'action d'avertissement n'est déclenchée que si la distance critique est dépassée vers le bas pendant une durée prédéterminée.

7. Procédé selon l'une des revendications 1 à 6,
caractérisé en ce qu'
on exécute une suite d'actions d'avertissement si le véhicule passe en dessous de la distance critique et qu'à ces actions successives sont associées des valeurs de distance qui résultent de la répartition de la distance critique en fonction du nombre d'actions successives.

8. Procédé selon l'une des revendications 1 à 7,
caractérisé en ce qu'
en cas de disparition de l'obstacle, la distance critique est rétablie à la valeur applicable avant que l'obstacle n'arrive.
